# EUROPÄISCHE PATENTSCHRIFT

(11) **EP 0 453 861 B1**
(45) Veröffentlichungstag und Bekanntmachung des Hinweises auf die Patenterteilung: **13.10.1993**
(21) Anmeldenummer: 91105578.8
(22) Anmeldetag: 09.04.1991
(51) Int. Cl.: A01C 17/00

(54) **Verteilmaschine**
Spreader
Epandeur

(30) Priorität: 23.04.1990 DE 4012826
(43) Veröffentlichungstag der Anmeldung: 30.10.1991
(73) Patentinhaber: Amazonen-Werke H. Dreyer GmbH & Co. KG, D-49205 Hasbergen (DE)
(72) Erfinder: Dreyer, Klaus, W-4507 Hasbergen (DE); Wiendieck, Karl-Wilhelm, W-4500 Osnabrück (DE); Bresch, Robert, W-4550 Bramsche (DE); Pöd, Detlef, W-4500 Osnabrück (DE); Stein, Klaus, W-4531 Lotte (DE); Scheufler, Bernd, Dr., W-4507 Hasbergen (DE)

(56) Entgegenhaltungen:
- EP-A- 0 191 374
- EP-A- 0 192 089
- EP-A- 0 219 015
- EP-A- 0 337 069
- DE-A- 3 738 543

## Beschreibung

Die Erfindung betrifft eine Verteilmaschine mit mehreren Dosierelementen, die getrennt und gemeinsam mittels Stellmotore zu steuern und/oder zu regeln sind, wobei die Betätigung der Stellmotore für die Dosierelemente über eine Fernbedienungseinrichtung erfolgt.

Derartig ausgebildete Verteilmaschinen sind in der landwirtschaftlichen Praxis bekannt.

Der Erfindung liegt die Aufgabe zugrunde, die Ein- und Verstellung der Dosierelemente für die gattungsgemäße Verteilmaschine hinsichtlich einer exakten Dosierung weiterzubilden.

Diese Aufgabe wird in erfindungsgemäßer Weise dadurch gelöst, daß die Stellmotore elektrisch betrieben und mit einer elektrischen oder elektronischen Steuereinrichtung versehen sind, die von der Fernbedienungsvorrichtung jeweils derart ansteuerbar ist, daß sämtliche Stellmotore synchron betätigbar sind, so daß sie Synchronlauf aufweisen.

Infolge dieser Maßnahmen wird erreicht, daß die zur Ausbringmengendosierung einer Verteilmaschine zugeordneten, ein- und vertellbaren Dosierelemente alle in identischer Weise ein- und verstellbar sind, wenn die Betätigung der Stellmotore für die Dosierelemente über eine Fernbedienungseinrichtung erfolgt. D.h., wird über die Fernbedienungseinrichtung eine bestimmte Dosierelementeeinstellung vorgewählt, wird gewährleistet, daß alle Dosierelemente in der gleichen Zeiteinheit denselben Einstellwert erreichen bzw. anfahren, so daß den von den einzelnen Dosierelementen mit dem auszubringenden Material versorgten Abschnitten der Arbeitsbreite der Verteilmaschine exakt die gewünschte Ausbringmenge zugeführt wird.

In einer Ausführungsform ist erfindungsgemäß vorgesehen, daß die Fernbedienungseinrichtung einen Stellknopf aufweist, über den die Steuereinrichtung derart einstellbar ist, daß für die Stellmotore ein gemeinsamer Wert vorgebbar ist und zwar derart, daß sämtliche Dosierelemente die gleiche Einstellung aufweisen. Hierdurch wird auf einfachste Weise eine exakt gleiche Einstellung der Ausbringmenge für sämtliche Dosierelemente - durch Betätigung nur eines Einstellknopfes - erreicht.

Weiterhin ist erfindungsgemäß vorgesehen, daß die Fernbedienungsvorrichtung einen Stellknopf oder mehrere Stellknöpfe aufweist, daß über diesen Stellknopf oder diese Stellknöpfe die Steuereinrichtung derart einstellbar ist, daß über diesen Stellknopf in überlagerter Weise jeder Stellmotor für sich unabhängig von den jeweils anderen Stellmotoren verstellt werden kann. Durch diese erfindungsgemäße Maßnahme wird erreicht, daß sich die Ausbringmenge der einzelnen, mittels der Stellmotore einstellbaren Dosierelemente unabhängig voneinander von der vorgewählten, gemeinsamen Grundeinstellung verändern läßt und sich so den individuellen Einsatzbedingungen angepaßt werden kann.

Eine besonders einfache Möglichkeit zur gemeinsamen Veränderung der Ausbringmenge von der gewählten Grundausbringmenge durch Verstellung der Verstellmotore für die Dosierorgane ergibt sich erfindungsgemäß dadurch, daß die Fernbedienungseinrichtung einen Stellknopf aufweist, über den die Steuereinrichtung derart ansteuerbar ist, daß in überlagerter Weise gleichzeitig sämtliche Motoren verstellt werden können.

Damit sich der Ausbringvorgang aller Dosierorgane nun zu jeder Zeit gemeinsam unterbrechen bzw. einschalten läßt, ist erfindungsgemäß vorgesehen, daß die Steuereinrichtung eine Stelleinrichtung aufweist, mit der die Steuereinrichtung derart ansteuerbar ist, daß die Stellmotore in eine Stellung "Auf" oder "Betrieb" und in eine Stellung "Zu" oder "Unterbrechung des Ausbringvorganges" einstellbar sind.

Zur abschnittsweisen Reduzierung oder Vergrößerung der Arbeitsbreite der Verteilmaschine, durch das Ab- oder Zuschalten einzelner, die jeweiligen Abschnitte der Arbeitsbreite versorgender Dosierorgane, ist erfindungsgemäß vorgesehen, daß die Fernbedienungseinrichtung für jeden Stellmotor eine eigenen Schalter aufweist, mit dem die Steuereinrichtung in derartiger Weise überlagerbar ansteuerbar ist, daß jeder Motor einzeln in die Stellung "Auf" und in die Stellung "Zu" steuerbar ist.

In einer weiteren Ausführungsform ist erfindungsgemäß vorgesehen, daß die Fernbedienungsvorrichtung in an sich bekannter Weise mit einer Tastfolie zum Betätigen der verschiedenen Steuerungen ausgerüstet ist.

Nach der erfindungsgemäßen Ausführungsform ist vorgesehen, daß die Verteilmaschine als Schleuderdüngerstreuer mit zwei oder mehreren Dosierelementen und jeweils zugeordneten Schleuderscheiben oder als Pneumatikdüngerstreuer ausgebildet ist.

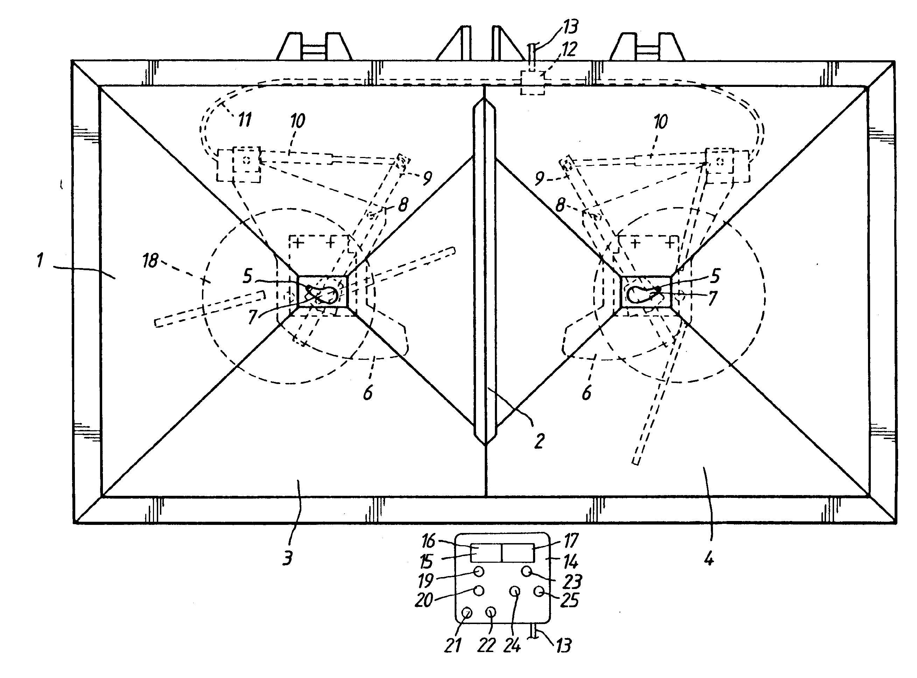

Weitere Einzelheiten der Erfindung sind der Beispielsbeschreibung und der Zeichnung zu entnehmen. Hierbei zeigt die Zeichnung
eine als Schleuderdüngerstreuer ausgebildete, erfindungsgemäß ausgerüstete Verteilmaschine in Draufsicht und in Prinzipdarstellung.

Die Verteilmaschine ist als Anbauschleuderdüngerstreuer ausgebildet und weist den Vorratsbehälter 1 auf. Durch das dachförmige Mittelteil 2 ist der Vorratsbehälter in zwei trichterfömige Behälterteile 3 und 4 aufgeteilt. Jeder trichterförmige Behälterteil 3, 4 ist in seinem unteren Bereich mit der Auslauföffnung 5 ausgerüstet. Diese Auslauföffnung 5 befindet sich jeweils in dem als Bodenplatte 6 ausgebildeten Dosierorgan. Die Auslauföffnung 5 ist jeweils in ihrer Öffnungsweite durch den unter der Bodenplatte 6 und vor der Auslauföffnung 5 angeordneten Schieber 7 einstellbar. Der Schieber 7 ist um den Bolzen 8 drehbar an der Bodenplatte 6 gelagert. Der Schieber 7 weist den nach vorne über den Bolzen 8 hinausragenden Bedienungshebel 9 auf. Zwischen dem Bedienungshebel 9 und der Bodenplatte 6 ist der elektrische Stellmotor 10 angeordnet, der als Fernbedienungseinrichtung ausgebildet ist. Über den jeweiligen Stellmotor 10 ist die Öffnungsweite der Auslauföffnung 5 durch verschwenken des Schiebers 7 einstell- und verschließbar. Der jeweilige elektrische Stellmotor 10 ist über das Kabel 11 mit dem Verteiler 12 verbunden. Dieser Verteiler wiederum ist über das Kabel 13 mit der auf den den Anbauschleuderstreuer transportierenden Schlepper befindlichen Fernbedienungsvorrichtung 14 verbunden. Die Fernbedienungsvorrichtung 14 ist als Schaltkasten ausgebildet und weist das Display 15 auf. Dieses Display 15 ist in die beiden Anzeigenfelder 16 und 17 aufgeteilt. Diesen Anzeigefeldern 16 und 17 sind die jeweiligen Einstellungen der Dosierorgane zu entnehmen. Auf dem Anzeigenfeld 16 ist die jeweilige Stellung des linken Dosierorgans und auf dem Anzeigenfeld 17 die Einstellung des rechten Dosierorgans abzulesen. Angezeigt werden z.B. ein für die entsprechend vorgewählte Ausbringmenge charakeristischer Ausbringmengenwert, z.B. die jeweils eingestellte Schieberstellung des Schiebers 7 oder die direkte Ausbringmenge des jeweiligen Dosierorgans in kg/ha. Der jeweils angezeigte Wert entspricht der den unterhalb der Dosierorgane angeordneten Schleuderscheiben 18 zudosierten Düngermenge.

Über den Stellknopf 19 wird die gewünschte Ausbringmenge bzw. ein der gewünschten Ausbringmenge charakteristischer Wert (Schieberstellung) für beide Stellmotore 10 vorgegeben, wobei beide Dosierorgane die gleiche Einstellung, d.h., die Auslauföffnung den exakt gleichen Querschnitt aufweisen. Auf den Anzeigenfeldern 16 und 17 des Displays 15 erscheinen dann gleiche Ziffernwerte. Mittels des Stellknopfes 19 wird also ein gemeinsamer Wert für die Grundausbringmenge eingestellt, der eine synchrone Betätigung und Einstellung beider Stellmotore 10 bewirkt.

Die über den Stellknopf 19 eingestellte Ausbringmenge läßt sich mittels des Stellknopfes 20 für beide Dosierorgane verändern, so daß sich die Ausbringmenge bezogen auf den eingestellten Grundausbringmengenwert für beide Dosierorgane synchron verringern oder erhöhen läßt. Durch eine Betätigung der Stellknöpfe 21 und 22 läßt sich die Ausbringmenge für die beiden Dosierorgane unabhängig voneinander von dem mittels des Stellknopfes 19 eingestellen Grundausbringmengenwertes verändern. Auf den Anzeigenfeldern 16 und 17 des Displays 15 erscheinen dann unterschiedliche Werte.

Der Stellknopf 23 dient zur zentralen Ein- und Ausschaltung der Dosierorgane. Eine Betätigung dieses Schaltknopfes führt zu einem gleichzeitigem Öffnen oder Verschließen der Auslauföffnungen 5. Soll während des Ausbringvorganges die Düngerzufuhr zu einer Schleuderscheibe unterbrochen oder zugeschaltet werden, läßt sich dieses für jede Schleuderscheibe getrennt durch das Betätigen der Stellknöpfe 24 und 25 durchführen. Hierdurch läßt sich die Arbeitsbreite bei diesem mit zwei Schleuderscheiben 18 ausgerüstetem Schleuderdüngerstreuer auf die Hälfte reduzieren. Das Abschalten der Materialzufuhr zu einer Schleuderscheibe wird auf dem Display 15 der Fernbedienungsvorrichtung 14 angezeigt.

## Patentansprüche

1. Verteilmaschine mit mehreren Dosierelementen, die getrennt und gemeinsam mittels Stellmotore (10) Steuerbar und/oder regelbar sind, wobei die Betätigung der Stellmotore (10) für die Dosierelemente über eine Fernbedienungseinrichtung (14) erfolgt, dadurch gekennzeichnet, daß die Stellmotore (10) elektrisch betrieben und mit einer elektrischen oder elektronischen Steuereinrichtung versehen sind, die von der Fernbedienungsvorrichtung (14) jeweils derart ansteuerbar ist, daß sämtliche Stellmotore (10) synchron betätigbar sind, so daß sie Synchronlauf aufweisen.

2. Verteilmaschine nach Anspruch 1, dadurch gekennzeichnet, daß die Fernbedienungseinrichtung (14) einen Stellknopf (19) aufweist, über den die Steuereinrichtung derart einstellbar ist, daß für die Stellmotore (10) ein gemeinsamer Wert vorgebbar ist, und zwar derart, daß sämtliche Dosierelemente (6) die gleiche Einstellung aufweisen.

3. Verteilmaschine nach einem oder mehreren der vorstehenden Ansprüche, dadurch gekennzeichnet, daß die Fernbedienungsvorrichtung (14) einen Stellknopf oder mehrere Stellknöpfe (21,22) aufweist, daß über diesen Stellknopf oder diese Stellknöpfe (21,22) die Steuereinrichtung derart einstellbar ist, daß über diesen Stellknopf oder diese Stellknöpfe (21,22) in überlagerter Weise jeder Stellmotor (10) für sich unabhängig von dem jeweils anderen Stellmotor (10) verstellt werden kann.

4. Verteilmaschine nach einem oder mehreren der vorstehenden Ansprüche, dadurch gekennzeichnet, daß die Fernbedienungseinrichtung (14) einen Stellknopf (20) aufweist, über den die Steuereinrichtung derart ansteuerbar ist, daß in überlagerter Weise gleichzeitig sämtliche Motoren (10) verstellt werden können.

5. Verteilmaschine nach einem oder mehreren der vorstehenden Ansprüche, dadurch gekennzeichnet, daß die Steuereinrichtung eine Stelleinrichtung (23) aufweist, mit der die Steuereinrichtung derart ansteuerbar ist, daß die Stellmotore (10) in eine Stellung "Auf" oder "Betrieb" und in eine Stellung "Zu" oder "Unterbrechung des Ausbringvorganges" einstellbar sind.

6. Verteilmaschine nach einem oder mehreren der vorstehenden Ansprüche, dadurch gekennzeichnet, daß die Fernbedienungseinrichtung (14) für jeden Stellmotor (10) einen eigenen Schalter (24,25) aufweist, mit dem die Steuereinrichtung in derartiger Weise überlagerbar ansteuerbar ist, daß jeder Motor (10) einzeln in die Stellung "Auf" und in die Stellung "Zu" steuerbar ist.

7. Verteilmaschine nach einem oder mehreren der vorstehenden Ansprüche, dadurch gekennzeichnet, daß die Fernbedienungsvorrichtung (14) in an sich bekannter Weise mit einer Tastfolie zum Betätigen der verschiedenen Steuerungen ausgerüstet ist.

8. Verteilmaschine nach Anspruch 1, dadurch gekennzeichnet, daß die Verteilmaschine als Schleuderdüngerstreuer mit zwei oder mehreren Dosierelementen (6) und jeweils zugeordneten Schleuderscheiben (18) ausgebildet ist.

9. Verteilmaschine nach Anspruch 1, dadurch gekennzeichnet, daß die Verteilmaschine als Pneumatikdüngerstreuer ausgebildet ist.

## Claims

1. Distributor, including a plurality of metering members, which are controllable and/or regulatable separately or jointly by means of setting motors (10), the setting motors (10) for the metering members being actuated through the intermediary of a remote control device (14) , characterised in that the setting motors (10) are electrically operated and are provided with an electric or electronic control means, which is actuatable by the remote control device (14) in such a manner that all of the setting motors (10) are synchronously actuatable, so that they have synchronous running.

2. Distributor according to claim 1, characterised in that the remote control device (14) has an adjusting knob (19), through the intermediary of which the control means is adjustable in such a manner that a common value is prescribable for the setting motors (10), and indeed in such a manner that all of the metering members (6) have the same adjustment.

3. Distributor according to one or more of the preceding claims, characterised in that the remote control device (14) has an adjustment knob or a plurality of adjustment knobs (21, 22), in that the control means is adjustable through the intermediary of this adjustment knob or these adjustment knobs (21, 22) in such a manner that each setting motor (10) may be adjusted on its own independently of the other respective setting motor (10) through the intermediary of this adjustment knob or these adjustment knobs (21, 22) in a superposed manner.

4. Distributor according to one or more of the preceding claims, characterised in that the remote control device (14) has an adjustment knob (20), through the intermediary of which the control means is actuatable in such a manner that all of the motors (10) may be simultaneously adjusted in a superposed manner.

5. Distributor according to one or more of the preceding claims, characterised in that the control means has a setting means (23), by means of which the control means is actuatable in such a manner that the setting motors (10) are adjustable into an "on" or "operation" position and into an "off" or "interruption of the distributing operation".

6. Distributor according to one or more of the preceding claims, characterised in that the remote control device (14) has a particular switch (24, 25) for each setting motor (10), the control means being actuatable by said switch in a superposable manner such that each motor (10) is individually controllable into the "on" position and into the "off" position.

7. Distributor according to one or more of the preceding claims, characterised in that, in a manner known per se, the remote control device (14) is provided with a sensing foil for actuating the various controls.

8. Distributor according to claim 1, characterised in that the distributor is a centrifugal fertilizer broadcaster having two or more metering members (6) and having centrifugal discs (18) associated respectively therewith.

9. Distributor according to claim 1, characterised in that the distributor is a pneumatic fertilizer broadcaster.

## Revendications

1. Epandeur à plusieurs éléments de dosage qui sont commandés et/ou réglés séparément ou en commun à l'aide de moteurs de réglage (10), la mise en oeuvre des moteurs de réglage (10) des éléments de dosage se faisant par une installation de télécommande (14), épandeur caractérisé en ce que les moteurs de réglage (10) sont des moteurs électriques équipés d'une installation de commande électrique ou électronique actionnée par le dispositif de télécommande (14) de façon que tous les moteurs de réglage (10) soient mis en oeuvre en synchronisme et qu'ils présentent ainsi un fonctionnement synchrone.

2. Epandeur selon la revendication 1, caractérisé en ce que l'installation de télécommande (14) comporte un bouton de réglage (19) qui règle l'installation de commande de façon à pouvoir prédéterminer une valeur commune pour les moteurs de réglage (10) et cela de façon que tous les éléments de dosage (6) soient réglés de façon identique.

3. Epandeur selon une ou plusieurs des revendications précédentes, caractérisé en ce que le dispositif de télécommande (14) comporte un ou plusieurs boutons de réglage (21, 22) et l'installation de commande se règle à l'aide de ce ou de ces boutons de réglage (21, 22) pour que de manière principale chaque moteur de réglage (10) puisse être réglé chaque fois indépendamment de l'autre moteur de réglage (10).

4. Epandeur selon une ou plusieurs des revendications précédentes, caractérisé en ce que l'installation de télécommande (14) comporte un bouton de réglage (20) qui permet de commander l'installation de commande de façon à pouvoir régler d'une manière principale, simultanément, tous les moteurs (10).

5. Epandeur selon une ou plusieurs des revendications précédentes, caractérisé en ce que l'installation de commande comporte une installation de réglage (23) qui agit sur l'installation de commande pour que les moteurs de réglage (10) puissent passer dans une position "ouverte" ou "fonctionnement" et une position "fermeture" ou "interruption de la distribution".

6. Epandeur selon une ou plusieurs des revendications précédentes, caractérisé en ce que l'installation de télécommande (14) comporte un commutateur (24, 25) indépendant associé à chaque moteur de réglage (10), commutateur par lequel on peut commander l'installation de commande d'une manière principale pour que chaque moteur (10) puisse être commandé séparément en position "ouverture" et en position "fermeture".

7. Epandeur selon une ou plusieurs des revendications précédentes, caractérisé en ce que l'installation de télécommande (14) est équipée d'une manière connue d'une feuille palpeur pour actionner les différentes commandes.

8. Epandeur selon la revendication 1, caractérisé en ce qu'il est constitué par un épandeur centrifuge d'engrais à deux ou plusieurs éléments de dosage (6) auxquels sont associés des disques d'épandage (18).

9. Epandeur selon la revendication 1, caractérisé en ce qu'il s'agit d'un épandeur d'engrais, pneumatique.
